Europäisches Patentamt

European Patent Office

Office européen des brevets

(19)

(11) Publication number: 0 353 964
A2

# EUROPEAN PATENT APPLICATION

(21) Application number: 89307725.5

(22) Date of filing: 28.07.89

(51) Int. Cl.4: B65G 53/56

(30) Priority: 05.08.88 GB 8818612

(43) Date of publication of application:
07.02.90 Bulletin 90/06

(84) Designated Contracting States:
AT BE CH DE ES FR GB GR IT LI LU NL SE

(71) Applicant: AIR TUBE CONVEYORS LIMITED
Birmingham Road Oldbury
Warley West Midlands B69 4HE(GB)

(72) Inventor: Henderson, Fraser
224 Ralph Road
Shirley Solihull West Midlands(GB)
Inventor: Clifford, Norman
2 Boswell Close
Darlaston West Midlands(GB)

(74) Representative: Carpenter, David et al
MARKS & CLERK Alpha Tower Suffolk Street
Queensway
Birmingham B1 1TT(GB)

(54) Pneumatic conveyor.

(57) A pneumatic conveyor including an elongate
tube (11) for conveying articles from an input station
(12) to a destination and means generating a gas
flow within the tube (11) towards said destination so
as to propel articles along said tube (11) in use, said
tube (11) including, at said input station (12) a displaceable region (15, 31) displaceable to provide
access to the interior of the tube (11) to permit input
of articles.

FIG 1

EP 0 353 964 A2

# PNEUMATIC CONVEYORS

This invention relates to pneumatic conveyors.

It is known to convey money, and documents from one location to another by inserting it into a carrier which is then moved by a gas flow (usually an air flow) along one or more tubes between the source and the destination.

In certain areas of manufacturing technology there is a need to transfer finished, or partially finished, components from one location to another and it is clear that in many instances such transfer could be effected by a pneumatic conveyor. It has been proposed to introduce articles into a gas flow in a conveyor tube by providing the tube with a "Y" - configuration, the stem and one limb of the "Y" being the main conveyor tube and the other limb of the "Y" being an inlet for articles to be conveyed. However such an arrangement has proved unsatisfactory owing to back pressure in the input limb hindering the movement of articles into the main pipe. In an attempt to improve the situation it has been proposed either to interrupt the operation of the gas flow generator, or to provide a valve in the main pipe upstream of the input limb, to prevent gas pressure being applied to the input limb during input of articles. Additionally to avoid pressure loss it has been proposed to provide the input limb with a valve. However, the timing and operation of two valves has proved cumbersome and slow and this together with the relatively high cost of the equipment has rendered the proposal unsatisfactory. It is a primary object of the present invention to provide a pneumatic conveyor in a simple and convenient form.

It is an object of a preferred embodiment of the present invention to provide for introduction of components into a pneumatic conveyor without interrupting operation of the means generating the gas flow within the conveyor. It is an object of a further preferred embodiment of the invention to provide a pneumatic conveyor with a simple and convenient means for decelerating components at a destination.

In accordance with the present invention there is provided a pneumatic conveyor including an elongate tube for conveying articles from an input station to a destination and means generating a gas flow within the tube towards said destination so as to propel articles along said tube in use, said tube including, at said input station, a displaceable region displaceable to provide access to the interior of the tube to permit input of articles.

Preferably the conveyor further includes, at said input station, an article supply conduit along which articles are supplied from a source, said conduit terminating adjacent said displaceable region of said tube, means for displacing and subsequently restoring said tube region, and sensor means for detecting the approach of an article along said conduit and controlling displacement of said tube region so that the arriving article can enter the tube and be conveyed to said destination.

Conveniently said displaceable region of said tube is a section of the wall of the tube which is movable to expose an aperture in the tube wall through which articles can enter the tube.

Alternatively said displaceable region is a short section of the tube intermediate the ends of the tube, said short section being connected to the remainder of the tube at one end by means of a flexible union, and being displaceable by flexure of the union to displace the opposite end of the section so providing an open tube end into which articles can be introduced.

Preferably said means for displacing and restoring said displaceable tube region includes a double acting pneumatic ram.

Preferably at or adjacent said destination the pneumatic conveyor includes a decelerating station at which the gas flow along the tube is vented so that propulsion of articles ceases and the articles can decelerate.

One example of the invention is illustrated in the accompanying drawings wherein;

Figure 1 is a diagrammatic perspective view of a pneumatic conveyor input station, and

Figure 2 is a view similar to Figure 1, but taken from a different angle, of a modified form of input station.

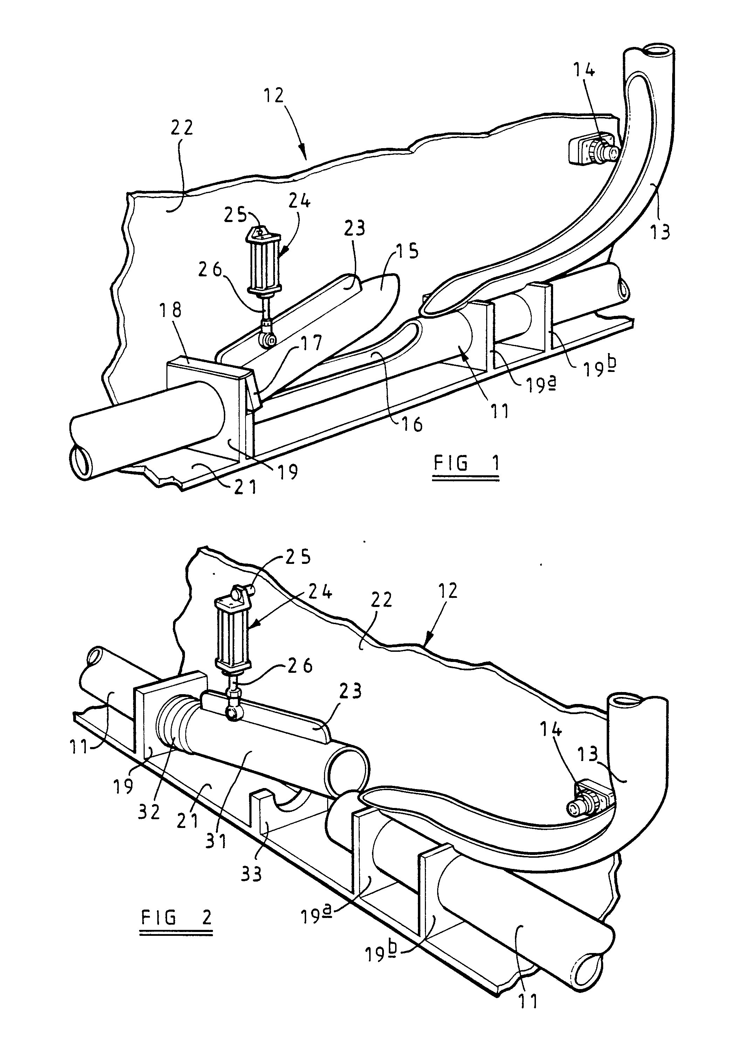

Referring first to Figure 1 it can be seen that the pneumatic conveyor includes an elongate tube 11 of circular cross-section which extends through an article input station 12. The tube 11 is conveniently formed from synthetic resin material, and upstream of the station 11, that is to say at the right-hand side of Figure 1, the tube 11 is connected to an electrically operated air blower which draws air from the ambient atmosphere, through a filter, and blows it along the tube 11 towards the station 12. Downstream of the station 12 the tube 11 extends to the destination of the articles to be conveyed. The destination may be some considerable distance from the station 12 and the tube 11 will conveniently extend within the ceiling void of the building housing the conveyor. Where it is necessary for there to be bends in the tube 11 then the bends will be gently radiused so as not to impede the passage of articles along the tube. Furthermore, it will be recognised that although the motive fluid for articles in the tube 11, in the present example, is air, there may be situations in which it is desired not to expose the articles being conveyed to air, and other fluids, for example relatively inert gases such as nitrogen may be used to propel articles along the tube 11.

In order that articles may be introduced into the tube 11 the input station 12 includes an article supply conduit in the form of a chute 13. Although the supply conduit may take a number of different forms dependent upon the nature of the article to be supplied, and the environment in which the conveyor is operating, it is convenient to form the conduit as the chute 13, from a length of plastics tube curved through substantially 90Ç and having its top surface cut away. The upper, remote end of the chute 13 receives articles to be conveyed, singly, from, from example, a vibratory feeder. Thus articles drop one at a time down the chute 13 and part way around the bend at the lower end of the chute 13 the articles pass adjacent a sensor 14 which detects their passage.

Adjacent the free end of the chute 13 an uppermost section of the wall of the tube 11 has been severed to define a displaceable cover 15 for closing a corresponding aperture 16 in the wall of the tube 11. The aperture 16 and cover 15 are elongate, and the end of the cover 15 remote from the chute 13 is secured to a block 17 hinged along its top surface by means of a flexible strip 18 to a fixed block 19. The fixed block 19 forms a support for the tube 11 and is anchored both to a base plate 21 and a perpendicular back plate 22. Similar blocks 19a, 19b are disposed upstream of the aperture 16 and again serve to support and locate the tube 11.

The cover 15, which of course is a section of the wall of the tube 11, is longitudinally strengthened by means of a longitudinally extending web 23 of synthetic resin material welded or otherwise secured to the cover 15. It will be recognised that under gravity the cover 15 will drop to a position in which the aperture 16 is closed and effectively the tube 11 is unbroken. However, the cover 15 can be lifted about the hinge defined by the flexible strip 18 so that a gape between the cover 15 and the aperture 16 is presented to the free end of the chute 13, whereby articles sliding down the chute 13 can enter the tube 11 by way of aperture 16.

It is found that when the air blower is operating, and the cover 15 is displaced to the position shown in Figure 1, then a low-pressure area is generated adjacent the free end of the chute 13 and thus there is an air flow into the aperture 16 at the free end of the chute 13 which assists in ensuring that lightweight articles leaving the end of the chute 13 enter the tube 11 by way of the aperture 16. It is also found that there is a venting of the air flow within the tube 11 adjacent the block 17 when the cover 15 is in the open position shown in Figure 1.

Thus the air flow generated by the blower, when the cover 15 is open, encourages lightweight articles to enter the aperture 16, but thereafter there is a spillage of the air flow from the aperture 16 close to the block 17. The spillage of the air flow adjacent the block 17 ensures that while the cover 15 is open lightweight articles do not move far along the tube 11 from the input station 12, but the spillage is insufficient to result in articles being carried by the airflow out of the tube 11 by way of the aperture 16.

Conveniently a double acting pneumatic ram 24 is utilized to move the cover 15 relative to the remainder of the tube 11. Thus the cylinder of the ram 24 is pivotally connected at 25 to the back plate 22, and the free end of the push rod 26 of the ram 24 is pivotally connected to the web 23 upstanding from the cover 15. Operation of the ram 24 by introduction of air under pressure beneath its piston causes withdrawal of the push rod 26 and so opens the cover 15, while reverse operation, entailing application of air pressure above the piston, causes the push rod 26 to be expelled from the ram thus moving the cover 15 to its closed position. An electro-magnetically operated valve controls the application of air pressure to the ram 24 and the sensor 14 provides a control signal to an electronic control arrangement which in turn operates the valve controlling the ram. Conveniently the sensor 14 includes an infra-red emitter and an infra-red detector so positioned in relation to one another that infra-red radiation from the emitter is reflected back to the receiver by an article travelling along the chute 13 past the sensor 14.

Conveniently where the articles to be conveyed are relatively lightweight articles, for example hypodermic syringe barrels formed from synthetic resin material, then the cover 15 is normally held in its closed position, and immediately an article passes the sensor 14 the signal from the sensor is used to operate the ram 24 to open the cover 15. The signal also energises a timing circuit which, after a predetermined interval of time, reverses the valve controlling the ram 24 so that the ram 24 closes the cover 15. The time interval during which the cover 15 remains open is calculated in relation to the speed with which articles pass along the chute 13 such that the article has sufficient time to travel the distance from the sensor 14 to the aperture 16, and to enter the aperture 16 before the cover 15 closes. It will be recognised that while the cover 15 is closed the air flow along the tube 11 will drive articles along the tube 11 to their destination. However, when the cover 15 opens the air flow downstream of the input station 12 will be greatly reduced and thus the motive force of the articles will also be reduced. Lightweight articles having correspondingly low momentum may well come rapidly to a halt when the cover 15 opens and in such circumstances it will usually be desirable to keep the open time of the cover 15 to a minimum.

The pneumatic conveyor is not restricted to use with articles of relatively low mass. For example, it is contemplated that the conveyor may be used with high mass articles such as metallic inlet and outlet valves for internal combustion engines. Such articles, having a relatively high density, will possess correspondingly greater momentum when moving along the tube 11. It may therefore in some circumstances be preferred to control the cover 15 such that the cover 15 is normally open, and is closed at a predetermined interval after the article has been detected by the sensor 14. The chosen interval is sufficient for the article to enter the tube 11 by way of the aperture 16 and the timing arrangement then maintains the cover 15 closed for a sufficient length of time for the article to achieve a predetermined velocity, and therefore a predetermined momentum such that, without further propulsion, the article will reach its destination along the tube 11. Thus after the predetermined closed period the cover 15 is opened in readiness to receive a following article from the chute 13 and by virtue of the reduced flow of air within the tube 11 the article decelerates towards its destination. Either by calculation, or by trial and error, the various time intervals are arranged such that articles will reach their destination with a sufficiently low velocity that they can manually, or automatically, be unloaded.

As an alternative to controlling the deceleration of articles at their destination by opening the cover 11 it is convenient to cut away a top section of the tube 16 at the destination so that over a predetermined length the tube is reduced to an open trough. It will be recognised that the air flow in the tube 11 will be vented through the open top at the destination and thus along the length of the trough the articles delivered to the destination will decelerate by virtue of friction between the article and the base of the trough. Where articles arriving at the destination possess significant momentum, either by virtue of their transit speed, or their mass or both, the necessary length of the trough for deceleration, may be inconveniently long. In such a situation it may be convenient to shape the trough into a helix, or a helical spiral terminating either at an unloading station or the input station of a further machine for performing further operations on the articles. It will be understood that the use of a deceleration trough, whether linear, or curved, is not restricted to a pneumatic conveyor having an input station of the kind described above, and can be used with other forms of pneumatic conveyor.

In the modification illustrated in Figure 2 components common to the arrangement of Figure 1 carry the same reference numeral. The basic difference between the arrangement of Figure 2 and the arrangement of Figure 1 is that rather than the tube 11 being partially cut away to define the cover 15, a short portion 31 is cut from the tube 11 intermediate its ends and the downstream end of the portion 31 is coupled to the adjacent end of the tube 11 by means of a flexible union 32. A U-shaped cradle 33 is positioned beneath the portion 31 adjacent its other end and in use supports the portion 31 aligned with the remainder of the tube 11. When the ram 24 is operated to withdraw the push rod 26 the portion 31 is lifted from the cradle 33 and in effect pivots adjacent the block 19 by virtue of the flexible union 32. Thus the end of the portion 31 remote from the union 32 is presented as an open end to the free end of the chute 13 and articles leaving the free end of the chute 13 enter the raised, open end of the portion 31. Thereafter operation of the ram 24 is reversed to return the portion 31 to the cradle 33 whereupon the portion 31 is coextensive with the tube 11 on both sides of the input station. Control over operation of the ram 24 is as described above in relation to the arrangement illustrated in Figure 1.

It will be recognised that in both examples machining of the cut faces of the tube 11 is performed to a degree of accuracy such that there is little or no air loss between the cut faces in the closed position of the cover 15 or portion 31.

In a further modification (not shown) of either of Figure 1 or the Figure 2 arrangements described above, the ram 24 and its control valve are replaced by one or more electromagnetic actuators. It will be understood that there may be applications where the articles to be conveyed should not be exposed to air and means may be provided for using a flow of inert gas as the motive fluid.

The use of a displaceable tube region to permit input of articles into the main conveyor tube avoids the need to interrupt the operation of the gas flow generator or to valve the main conveyor tube upstream of the input station.

## Claims

1. A pneumatic conveyor including an elongate tube (11) for conveying articles from an input station (12) to a destination and means generating a gas flow within the tube (11) towards said destination so as to propel articles along said tube in use, characterized in that said tube includes, at said input station (12), a displaceable region (15, 31) displaceable to provide access to the interior of the tube (11) to permit input of articles.

2. A conveyor as claimed in claim 1 characterized by an article supply conduit (13) along which articles are supplied from a source, said conduit (13) terminating adjacent said displaceable region (15, 31) of said tube (11), means (24) for displacing and subsequently restoring said tube region (15, 31), and sensor means (14) for detecting the approach of an article along said conduit (13) and controlling displacement of said tube region (15, 31) so that the arriving article can enter the tube (11) and be conveyed to said destination.

3. A conveyor as claimed in claim 1 or claim 2 characterized in that said displaceable region of said tube is a section (15) of the wall of the tube (11) which is movable to expose an aperture (16) in the tube wall through which articles can enter the tube.

4. A conveyor as claimed in claim 1 or claim 2 characterized in that said displaceable region is a short section (31) of the tube (11) intermediate the ends of the tube, said short section (31) being connected to the remainder of the tube (11) at one end by means of a flexible union (32) and being displaceable by flexure of the union to displace the opposite end of the section so providing an open tube end into which articles can be introduced.

5. A conveyor as claimed in any one of claims 1 to 4 characterized in that said means for displacing and restoring said displaceable tube region (15, 31) includes a double acting pneumatic ram (24).

6. A conveyor as claimed in anyone of claims 1 to 5 characterized in that at or adjacent said destination the pneumatic conveyor includes a decelerating station at which the gas flow along the tube (11) is vented so that propulsion of articles ceases and the articles can decelerate.

EP 0 353 964 A2

FIG 1

FIG 2